# EUROPÄISCHE PATENTSCHRIFT

(11) **EP 2 922 892 B1**
(45) Veröffentlichungstag und Bekanntmachung des Hinweises auf die Patenterteilung: **22.06.2016**
(21) Anmeldenummer: 13791973.4
(22) Anmeldetag: 12.11.2013
(51) Int. Cl.: C08G 65/00

(54) **VERFAHREN ZUR HERSTELLUNG VON POLYETHERESTER-POLYOLEN AUF BASIS NATÜRLICHER ÖLE UND DEREN EINSATZ IN POLYURETHAN-HARTSCHÄUMEN**
METHOD FOR THE PREPARATION OF POLYETHER ESTER POLYOLS BASED ON NATURAL OILS AND THEIR USE IN POLYURETHANE SOLID FOAMS
PROCÉDÉ DE FABRICATION DE POLYÉTHERESTERS-POLYOLS À BASE D'HUILES NATURELLES ET LEUR UTILISATION DANS DES MOUSSES RIGIDES DE POLYURÉTHANE

(30) Priorität: 20.11.2012 EP 12193438
(43) Veröffentlichungstag der Anmeldung: 30.09.2015
(73) Patentinhaber: BASF SE, 67056 Ludwigshafen am Rhein (DE)
(72) Erfinder: KÖNIG, Christian, 68165 Mannheim (DE); KOCH, Sebastian, 49448 Lemförde (DE)
(74) Vertreter: BASF IP Association
(86) Internationale Anmeldenummer: PCT/EP2013/073535
(87) Internationale Veröffentlichungsnummer: WO 2014/079721

(56) Entgegenhaltungen:
- EP-A1- 1 923 417
- EP-A1- 2 039 711
- WO-A1-2012/084760
- US-A1- 2002 099 230

## Beschreibung

Die vorliegende Anmeldung betrifft ein Verfahren zur Herstellung von Polyetherester-Polyolen auf Basis natürlicher Öle und deren Einsatz in Polyurethan-Hartschäumen.

Polyetherester-Polyole sind ein wichtiger Rohstoff für die Herstellung von Polyurethan (PU)-Kunststoffen. Bei der Herstellung von Polyurethanen ist die Verträglichkeit der Polyole für unpolare Treibmittel, wie zum Beispiel Pentan oder Cyclopentan, ein wichtiger Faktor.

Jedoch weisen gerade Polyole, die für PU-Hartschaumstoffe zum Einsatz kommen - d.h. Polyole mit einer relativ hohen OH-Zahl, wie zum Beispiel Zucker (Saccharose)-basierte Polyole -, wegen ihres hohen Anteils an polaren funktionellen Gruppen meist eine eher geringe Treibmittelverträglichkeit bzw. Pentanverträglichkeit auf. Eine Lösung für dieses Problem bei Polyolen für PU-Hartschaumstoffe können Polyole bieten, die neben mehrfunktionellen Startern, wie z. B. Zucker oder Glycerin, als hydrophoben Baustein Triglyceride enthalten. Dadurch können auch natürliche Rohstoffe, wie Fette oder Öle, als Baustein für Polyole und somit schlussendlich für PU-Hartschaumstoffe, verwendet werden.

Die Herstellung von Polyetherester-Polyolen ist prinzipiell bekannt und ist unter anderem in EP1923417 beschrieben.

EP 1923417A1 beschreibt beispielsweise die Synthese und Verwendung von Polyetherester-Polyolen auf Basis von Sorbitol/Glycerin und/oder Saccharose/Glycerin Mischungen mit Fettsäureestern. Dabei werden 5-85%, bevorzugt 20-60% Fettsäureester zur Synthese der erfindungsgemäßen Polyole verwendet. Der Einsatz von Fettsäureestern erhöht die Kapazität dieser Polyole für hydrophobe Substanzen wie Cyclopentan. Das Dokument offenbart Polyole mit Hydroxy-Werten kleiner 400 mg/KOH und einer Funktionalität < 4.1 bei Sojaöl-Gehalten von 23%, 37% und 52%. Diese Polyole zeigen eine erhöhte Kapazität für hydrophobe Substanzen wie Cyclopentan. Die OH-Zahl der in diesem Dokument in den Beispielen beschriebenen Polyether-ester-Polyole liegt zwischen ca. 50 mg KOH/g (u.a. in Bsp. I) bis unter 460 mg KOH/g (Bsp. H).

WO 2012/084760 beschreibt ein Verfahren zur Herstellung von Polyetheresterpololen auf Basis nachwachsender Rohstoffe mit dem Schwerpunkt Sojaöl unter dem Einsatz von basischen Katalysatoren mit dem Schwerpunkt KOH. Die Polyole werden nach dem Alkoxylierungsschritt mit Schwefelsäure neutralisiert und das hierbei gebildete Salz verbleibt im Produkt. Eine anschließende weitere Umsetzung mit Alkylenoxiden unter Verwendung des DMC-Katalysators wird ebenfalls beschrieben; ebenso wird die Verwendung der so hergestellten Polyole in PU-Weichschaumstoffen offenbart. Die OH-Zahl der in diesem Dokument im Beispielteil beschriebenen Polyetherester-Polyole liegt bei ca. 50 bis 60 mg KOH/g (siehe Bsp. 1 bis 4).

Es stellte sich also die Aufgabe, möglichst treibmittelverträgliche Polyole für PU-Hartschaumanwendungen bereitzustellen; die Polyole sollten also eine OH-Zahl von mindestens 460 mg KOH/g, bevorzugt mindestens 480 mg KOH/g aufweisen. Dabei sollte die Viskosität der Polyole dennoch in einem vertretbaren Rahmen liegen, d. h. nicht zu hoch sein, um die Verarbeitbarkeit zu gewährleisten.

Es wurde nun überraschenderweise gefunden, dass sich bei Untersuchung der Abhängigkeit der Verträglichkeit mit hydrophoben Treibmitteln wie Cyclopentan in Polyetheresterpolyolen für Hartschaumanwendungen (mit einer OH-Zahl von mindestens 460 mg KOH/g, bevorzugt mindestens 480 mg KOH/g) in Abhängigkeit von der eingesetzten Menge Fettsäureester überraschenderweise keine lineare Abhängigkeit der Triglyceridmenge zur Pentanverträglichkeit zeigte, wie der Fachmann erwarten würde. Vielmehr fanden wir eine definierte Konzentration der Triglyceridmenge, die zwischen 2 und 23% liegt, bei der die Kapazität für hydrophobe Substanzen maximal ist.

Der Gegenstand der vorliegenden Erfindung ist also ein Polyetheresterpolyol, bevorzugt ein homogenes Polyetheresterpolyol, mit einer OH-Zahl von 460 bis 580 mg KOH/g, bevorzugt 480 bis 580 mg KOH/g, besonders bevorzugt 480 bis 570 mg KOH/g, ganz besonders bevorzugt 480 bis 550 mg KOH/g, enthaltend das Umsetzungsprodukt von
a1) 5 bis 63 Gew.-%, bevorzugt 21 bis 50 Gew.-%, bezogen auf das Gesamtgewicht des Endprodukts, einer oder mehrerer Verbindung(en) mit mindestens zwei OH-Gruppen und/oder Verbindung(en) mit mindestens zwei NH-Gruppen oder von Gemischen daraus, mit einer mittleren Funktionalität von 2,5 bis 8 bevorzugt 4 bis 6.5, bevorzugt 4 bis 6.0, besonders bevorzugt 4.2 bis 5.5,
a2) 2 bis 23 Gew.-% , bezogen auf das Gesamtgewicht des Endprodukts, bevorzugt 10-22 Gew.-% einer oder mehrerer Fettsäuretriglyceride, die Fettsäuren mit 10 bis 22 C-Atomen, die keine freien OH-Gruppen aufweisen, enthalten,
a3) 25 bis 70 Gew.-%, bevorzugt 33% bis 65 Gew.-% , bezogen auf das Gesamtgewicht des Endprodukts, eines oder mehrerer Alkylenoxide mit 2 bis 4 C-Atomen.

Ein weiterer Gegenstand der vorliegenden Erfindung ist auch ein Verfahren zur Herstellung eines Polyetheresterpolyols, bevorzugt eines homogenen Polyetheresterpolyols, mit einer OH-Zahl von 460 bis 580 mg KOH/g, bevorzugt 480 bis 580 mg KOH/g, besonders bevorzugt 480 bis 570 mg KOH/g, ganz besonders bevorzugt 480 bis 550 mg KOH/g, wobei
a1) 5 bis 63 Gew.-%, bevorzugt 21 bis 50 Gew.-%, bezogen auf das Gesamtgewicht des Endprodukts, einer oder mehrerer Verbindung(en) mit mindestens zwei OH-Gruppen und/oder Verbindung(en) mit mindestens zwei NH-Gruppen oder von Gemischen daraus, mit einer mittleren Funktionalität von 2,5 bis 8 bevorzugt 4 bis 6.5, bevorzugt 4 bis 6.0, besonders bevorzugt 4.2 bis 5.5, mit
a2) 2 bis 23 Gew.-% , bezogen auf das Gesamtgewicht des Endprodukts, bevorzugt 10-22 Gew.-% einer oder mehrerer Fettsäuretriglyceride, die Fettsäuren mit 10 bis 22 C-Atomen, die keine freien OH-Gruppen aufweisen, enthalten, und
a3) 25 bis 70 Gew.-%, bevorzugt 33% bis 65 Gew.-% , bezogen auf das Gesamtgewicht des Endprodukts, eines oder mehrerer Alkylenoxide mit 2 bis 4 C-Atomen, unter Verwendung eines basischen Katalysators umgesetzt werden.

Hierbei wird die OH-Zahl jeweils nach DIN 53240 bestimmt (DIN = "deutsche Industrienorm").

Ein weiterer Gegenstand der vorliegenden Erfindung ist zudem ein Verfahren zur Herstellung eines Polyurethans, wobei das erfindungsgemäße Polyetheresterpolyol oder ein gemäß dem erfindungsgemäßen Verfahren herstellbares Polyetheresterpolyol mit mindestens einem Isocyanat, wahlweise unter Einsatz mindestens eines Treibmittels, umgesetzt wird.

In einer bevorzugten Ausführungsform sind bei dem erfindungsgemäßen Polyetheresterol die Polyole oder Polyamine der Komponente a1) ausgewählt aus der Gruppe bestehend aus Zuckern, Pentaerythrit, Sorbit, Trimethylolpropan, Glycerin, Toluylendiamin, Ethylendiamin, Ethylenglykol, Propylenglykol, Wasser und Mischungen daraus.

In einer weiteren bevorzugten Ausführungsform enthält die Komponente a1) ein Gemisch aus Glycerin und Saccharose, bevorzugt mit einem Mischungsverhältnis von Saccharose zu Glycerin im Bereich 9:1 bis 1:1, besonders bevorzugt Saccharose zu Glycerin 4:1 bis 1:1, bezogen auf Gewichtsprozente.

In einer weiteren bevorzugten Ausführungsform ist die Komponente a2) ausgewählt aus der Gruppe bestehend aus Sojaöl, Rapsöl, Palmöl, Olivenöl, Sonnenblumenöl, Talg, Tran und Mischungen daraus, bevorzugt Mischungen enthaltend Sojaöl, Rapsöl und/ oder Palmöl, besonders bevorzugt Sojaöl.

In einer weiteren bevorzugten Ausführungsform ist das Alkylenoxid der Komponente a3) ausgewählt aus der Gruppe enthaltend Ethylenoxid, Propylenoxid, Butylenoxid und Mischungen daraus, bevorzugt Mischungen enthaltend Propylenoxid und Ethylenoxid, besonders bevorzugt Propylenoxid.

In einer weiteren bevorzugten Ausführungsform weist der erfindungsgemäße Polyetheresterpolyol eine Funktionalität von 2,5 bis 8, bevorzugt 4 bis 6,5 auf.

In einer weiteren bevorzugten Ausführungsform weist der erfindungsgemäße Polyetheresterpolyol eine Säurezahl von kleiner oder gleich 0,5 mg KOH/g auf, bestimmt nach DIN 53402.

In einer weiteren bevorzugten Ausführungsform ist der erfindungsgemäße Polyetheresterpolyol herstellbar unter Verwendung eines Aminkatalysators.

In einer bevorzugten Ausführungsform des erfindungsgemäßen Verfahrens ist der basische Katalysator ausgewählt aus der Gruppe enthaltend KOH, und aminische Verbindungen, bevorzugt aminische Verbindungen, besonders bevorzugt Imidazol.

In einer weiteren bevorzugten Ausführungsform des erfindungsgemäßen Verfahrens wird das Verfahren in einem Prozessschritt, also einstufig, durchgeführt.

In einer weiteren bevorzugten Ausführungsform des erfindungsgemäßen Verfahrens sind die Polyole oder Polyamine der Komponente a1) ausgewählt aus der Gruppe bestehend aus Zuckern, Pentaerythrit, Sorbit, Trimethylolpropan, Glycerin, Toluylendiamin, Ethylendiamin, Ethylenglykol, Propylenglykol, Wasser und Mischungen daraus.

In einer weiteren bevorzugten Ausführungsform des erfindungsgemäßen Verfahrens enthält die Komponente a1) ein Gemisch aus Glycerin und Saccharose, bevorzugt mit einem Mischungsverhältnis von Saccharose zu Glycerin im Bereich 9:1 bis 1:1, besonders bevorzugt Saccharose zu Glycerin 4:1 bis 1:1, bezogen auf Gewichtsprozente.

In einer weiteren bevorzugten Ausführungsform des erfindungsgemäßen Verfahrens ist die Komponente a2) ausgewählt aus der Gruppe bestehend aus Sojaöl, Rapsöl, Palmöl, Olivenöl, Sonnenblumenöl, Talg, Tran und Mischungen daraus, bevorzugt Mischungen enthaltend Sojaöl, Rapsöl und/oder Palmöl, besonders bevorzugt Sojaöl.

In einer weiteren bevorzugten Ausführungsform des erfindungsgemäßen Verfahrens ist das Alkylenoxid der Komponente a3) ausgewählt aus der Gruppe enthaltend Ethylenoxid, Propylenoxid, Butylenoxid und Mischungen daraus, bevorzugt Mischungen enthaltend Propylenoxid und Ethylenoxid, besonders bevorzugt Propylenoxid.

In einer weiteren bevorzugten Ausführungsform des erfindungsgemäßen Verfahrens weist der Polyetheresterpolyol eine Funktionalität von 2,5 bis 8, bevorzugt 4 bis 6,5 auf.

In einer weiteren bevorzugten Ausführungsform des erfindungsgemäßen Verfahrens weist der Polyetheresterpolyol eine Säurezahl von kleiner oder gleich 0,5 mg KOH/g auf.

Figur 1 beschreibt die Abhängigkeit der Pentanverträglichkeit des erhaltenen Polyols vom eingesetzten Anteil an Sojaöl (Ergebnisse der Beispielversuche).

### Beispiele

Im Folgenden werden einige Beispiele zur Veranschaulichung der Erfindung angeführt. Dabei dienen die Beispiele nur illustrativen Zwecken und sollen keinesfalls den Umfang der Ansprüche einschränken.

Die Pentanlöslichkeit wurde bestimmt, indem schrittweise Pentan in die zu messende Komponente gegeben wurde. In exakt 100 g der zu untersuchenden Komponente wurden je nach erwartender Pentanlöslichkeit Pentan zugegeben und vermischt. War das Gemisch weder trüb noch zweiphasig, so musste weiteres Pentan hinzugegeben und erneut vermischt werden. War das Gemisch zweiphasig, ließ man das Glas bei Raumtemperatur offen stehen, bis das überschüssige Pentan verdampft und die verbleibende Lösung klar war, und wog dann die gelöste Menge Pentan zurück. Bei einer Trübung wurde das Glas verschlossen und bei Raumtemperatur so lange stehen gelassen, bis sich zwei Phasen gebildet hatten. Danach erfolgte das Abdampfen und Zurückwiegen.

Die Viskosität wurde gemäß DIN 53018 bei 25°C bestimmt. Die OH-Zahl wurde bestimmt nach DIN 53240.

### Beispiel 1: Herstellung eines Polyetheresters mit Glycerin, Saccharose und Sojaöl

30,4 g Glycerin, 0,1 g Imidazol, 49,1 g Saccharose sowie 12,0 g Sojaöl wurden bei 25 °C in einen Reaktor vorgelegt. Anschließend wurde dieser mit Stickstoff inertisiert. Der Kessel wurde auf 130 °C erhitzt und 148,4 g Propylenoxid zu dosiert. Nach einer Abreaktionszeit von 7 h wurde für 40 Minuten unter vollem Vakuum bei 100 °C evakuiert und anschließend auf 25 °C abgekühlt. Es wurden 208,8 g Produkt erhalten.

Der erhaltene Polyetherester besaß folgende Kennwerte:
OH-Zahl: 522,4 mg KOH/g
Viskosität (25 °C): 11957 mPas
Cyclopentanverträglichkeit: 14%

### Beispiel 2: Herstellung eines Polyetheresters mit Glycerin, Saccharose und Sojaöl

30,4 g Glycerin, 0,1 g Imidazol, 49,1 g Saccharose sowie 24,0 g Sojaöl wurden bei 25 °C in einen Reaktor vorgelegt. Anschließend wurde dieser mit Stickstoff inertisiert. Der Kessel wurde auf 130 °C erhitzt und 136,4 g Propylenoxid zu dosiert. Nach einer Abreaktionszeit von 5 h wurde für 40 Minuten unter vollem Vakuum bei 100 °C evakuiert und anschließend auf 25 °C abgekühlt. Es wurden 211,4 g Produkt erhalten.

Der erhaltene Polyetherester besaß folgende Kennwerte:
OH-Zahl: 512,6 mg KOH/g
Viskosität (25 °C): 10465 mPas
Cyclopentanverträglichkeit: 25%

### Beispiel 3: Herstellung eines Polyetheresters mit Glycerin, Saccharose und Sojaöl

30,4 g Glycerin, 0,1 g Imidazol, 49,1 g Saccharose sowie 36,0 g Sojaöl wurden bei 25 °C in einen Reaktor vorgelegt. Anschließend wurde dieser mit Stickstoff inertisiert. Der Kessel wurde auf 130 °C erhitzt und 124,4 g Propylenoxid zu dosiert. Nach einer Abreaktionszeit von 4 h wurde für 40 Minuten unter vollem Vakuum bei 100 °C evakuiert und anschließend auf 25 °C abgekühlt. Es wurden 205,6 g Produkt erhalten.

Der erhaltene Polyetherester besaß folgende Kennwerte:
OH-Zahl: 526,9 mg KOH/g
Viskosität (25 °C): 11294 mPas
Cyclopentanverträglichkeit: 35%

### Beispiel 4: Herstellung eines Polyetheresters mit Glycerin, Saccharose und Sojaöl

30,4 g Glycerin, 0,1 g Imidazol, 49,1 g Saccharose sowie 60,0 g Sojaöl wurden bei 25 °C in einen Reaktor vorgelegt. Anschließend wurde dieser mit Stickstoff inertisiert. Der Kessel wurde auf 130 °C erhitzt und 100,4 g Propylenoxid zu dosiert. Nach einer Abreaktionszeit von 8 h wurde für 40 Minuten unter vollem Vakuum bei 100 °C evakuiert und anschließend auf 25 °C abgekühlt. Es wurden 220,3 g Produkt erhalten.

Der erhaltene Polyetherester besaß folgende Kennwerte:
OH-Zahl: 512,8 mg KOH/g
Viskosität (25 °C): 9639 mPas
Cyclopentanverträglichkeit: 32%

### Beispiel 5: Herstellung eines Polyetheresters mit Glycerin, Saccharose und Sojaöl

30,4 g Glycerin, 0,1 g Imidazol, 49,1 g Saccharose sowie 84,0 g Sojaöl wurden bei 25 °C in einen Reaktor vorgelegt. Anschließend wurde dieser mit Stickstoff inertisiert. Der Kessel wurde auf 130 °C erhitzt und 76,4 g Propylenoxid zu dosiert. Nach einer Abreaktionszeit von 7 h wurde für 40 Minuten unter vollem Vakuum bei 100 °C evakuiert und anschließend auf 25 °C abgekühlt. Es wurden 225,6 g Produkt erhalten.

Der erhaltene Polyetherester besaß folgende Kennwerte:
OH-Zahl: 505,5 mg KOH/g
Viskosität (25 °C): 9243 mPas
Cyclopentanverträglichkeit: 16%

## Patentansprüche

1. Polyetheresterpolyol mit einer OH-Zahl von 480 bis 580 mg KOH/g, bestimmt nach DIN 53240, enthaltend das Umsetzungsprodukt von
a1) 5 bis 63 Gew.-%, bevorzugt 21 bis 50 Gew.-%, bezogen auf das Gesamtgewicht des Endprodukts, einer oder mehrerer Verbindung(en) mit mindestens zwei OH-Gruppen und/oder Verbindung(en) mit mindestens zwei NH-Gruppen oder von Gemischen daraus, mit einer mittleren Funktionalität von 2,5 bis 8, bevorzugt 4 bis 6.5, besonders bevorzugt 4 bis 6.0, ganz besonders bevorzugt 4.2 bis 5.5,
a2) bezogen auf das Gesamtgewicht des Endprodukts 10-22 Gew.% einer oder mehrerer Fettsäuretriglyceride, die Fettsäuren mit 10 bis 22 C-Atomen, die keine freien OH-Gruppen aufweisen, enthalten,
a3) 25 bis 70 Gew.-%, bevorzugt 33% bis 65 Gew.-%, bezogen auf das Gesamtgewicht des Endprodukts, eines oder mehrerer Alkylenoxide mit 2 bis 4 C-Atomen.

2. Polyetheresterpolyol nach Anspruch 1, **dadurch gekennzeichnet, dass** die Polyole oder Polyamine der Komponente a1) ausgewählt sind aus der Gruppe bestehend aus Zuckern, Pentaerythrit, Sorbit, Trimethylolpropan, Glycerin, Toluylendiamin, Ethylendiamin, Ethylenglykol, Propylenglykol, Wasser und Mischungen daraus.

3. Polyetheresterpolyol nach Anspruch 2, **dadurch gekennzeichnet, dass** die Komponente a1) ein Gemisch aus Glycerin und Saccharose enthält, bevorzugt mit einem Mischungsverhältnis von Saccharose zu Glycerin im Bereich 9:1 bis 1:1, besonders bevorzugt Saccharose zu Glycerin 4:1 bis 1:1, bezogen auf Gewichtsprozente.

4. Polyetheresterpolyol nach Anspruch 2 oder 3, **dadurch gekennzeichnet, dass** die Komponente a2) ausgewählt ist aus der Gruppe bestehend aus Sojaöl, Rapsöl, Palmöl, Olivenöl, Sonnenblumenöl, Talg, Tran und Mischungen daraus, bevorzugt Mischungen enthaltend Sojaöl, Rapsöl und/oder Palmöl, besonders bevorzugt Sojaöl.

5. Polyetheresterpolyol nach einem der Ansprüche 1 bis 4, **dadurch gekennzeichnet, dass** das Alkylenoxid der Komponente a3) ausgewählt ist aus der Gruppe enthaltend Ethylenoxid, Propylenoxid, Butylenoxid und Mischungen daraus, bevorzugt Mischungen enthaltend Propylenoxid und Ethylenoxid, besonders bevorzugt Propylenoxid.

6. Polyetheresterpolyol nach einem der Ansprüche 1 bis 5, **dadurch gekennzeichnet, dass** es eine Funktionalität von 2,5 bis 8, bevorzugt 4 bis 6,5 aufweist.

7. Polyetheresterpolyol nach einem der Ansprüche 1 bis 6, wobei es eine Säurezahl von kleiner oder gleich 0,5 mg KOH/g aufweist, bestimmt gemäß DIN 53402.

8. Polyetheresterpolyol nach einem der Ansprüche 1 bis 7, wobei das Polyetheresterpolyol unter Verwendung eines Aminkatalysators, bevorzugt eines Imidazols, hergestellt wurde.

9. Verfahren zur Herstellung eines Polyetheresterpolyols mit einer OH-Zahl von 480 bis 580 mg KOH/g, bestimmt nach DIN 53240, wobei
a1) 5 bis 63 Gew.-%, bevorzugt 21 bis 50 Gew.%, bezogen auf das Gesamtgewicht des Endprodukts, einer oder mehrerer Verbindung(en) mit mindestens zwei OH-Gruppen und/oder Verbindung(en) mit mindestens zwei NH-Gruppen oder von Gemischen daraus, mit einer mittleren Funktionalität von 2,5 bis 8, bevorzugt 4 bis 6.5, besonders bevorzugt 4 bis 6.0, ganz besonders bevorzugt 4.2 bis 5.5, mit
a2) bezogen auf das Gesamtgewicht des Endprodukts 10-22 Gew.-% einer oder mehrerer Fettsäuretriglyceride, die Fettsäuren mit 10 bis 22 C-Atomen, die keine freien OH-Gruppen aufweisen, enthalten, und
a3) 25 bis 70 Gew.-%, bevorzugt 33% bis 65 Gew.-%, bezogen auf das Gesamtgewicht des Endprodukts, eines oder mehrerer Alkylenoxide mit 2 bis 4 C-Atomen,
unter Verwendung eines basischen Katalysators umgesetzt werden.

10. Verfahren zur Herstellung eines Polyetheresterpolyols gemäß Anspruch 9, wobei der basische Katalysator ausgewählt ist aus der Gruppe enthaltend KOH und aminische Verbindungen, bevorzugt aminische Verbindungen, besonders bevorzugt Imidazol.

11. Verfahren zur Herstellung eines Polyetheresterpolyols gemäß Anspruch 9 oder 10, wobei das Verfahren in einem Prozessschritt durchgeführt wird.

12. Verfahren zur Herstellung eines Polyetheresterpolyols gemäß einem der Ansprüche 9 bis 11, wobei die Polyole oder Polyamine der Komponente a1) ausgewählt sind aus der Gruppe bestehend aus Zuckern, Pentaerythrit, Sorbit, Trimethylolpropan, Glycerin, Toluylendiamin, Ethylendiamin, Ethylenglykol, Propylenglykol, Wasser und Mischungen daraus.

13. Verfahren zur Herstellung eines Polyetheresterpolyols gemäß einem der Ansprüche 9 bis 12, wobei die Komponente a1) ein Gemisch aus Glycerin und Saccharose enthält, bevorzugt mit einem Mischungsverhältnis von Saccharose zu Glycerin im Bereich 9:1 bis 1:1, besonders bevorzugt Saccharose zu Glycerin 4:1 bis 1:1, bezogen auf Gewichtsprozente.

14. Verfahren zur Herstellung eines Polyetheresterpolyols gemäß einem der Ansprüche 9 bis 13, wobei die Komponente a2) ausgewählt ist aus der Gruppe bestehend aus Sojaöl, Rapsöl, Palmöl, Olivenöl, Sonnenblumenöl, Talg, Tran und Mischungen daraus, bevorzugt Mischungen enthaltend Sojaöl, Rapsöl und/oder Palmöl, besonders bevorzugt Sojaöl.

15. Verfahren zur Herstellung eines Polyetheresterpolyols gemäß einem der Ansprüche 9 bis 14, wobei das Alkylenoxid der Komponente a3) ausgewählt ist aus der Gruppe enthaltend Ethylenoxid, Propylenoxid, Butylenoxid und Mischungen daraus, bevorzugt Mischungen enthaltend Propylenoxid und Ethylenoxid, besonders bevorzugt Propylenoxid.

16. Verfahren zur Herstellung eines Polyetheresterpolyols gemäß einem der Ansprüche 9 bis 15, wobei das Polyetheresterpolyol eine Funktionalität von 2,5 bis 8, bevorzugt 4 bis 6,5, aufweist.

17. Verfahren zur Herstellung eines Polyetheresterpolyols gemäß einem der Ansprüche 9 bis 16, wobei das Polyetheresterpolyol eine Säurezahl von kleiner oder gleich 0,5 mg KOH/g, bestimmt gemäß DIN 53402, aufweist.

18. Verfahren zur Herstellung eines Polyurethans, wobei das Polyetheresterpolyol gemäß einem der Ansprüche 1 bis 8 oder ein gemäß dem Verfahren eines der Ansprüche 9 bis 17 herstellbares Polyetheresterpolyol mit mindestens einem Isocyanat, wahlweise unter Einsatz mindestens eines Treibmittels, umgesetzt wird.

## Claims

1. A polyetherester polyol having an OH number of 480 to 580 mg KOH/g, determined according to DIN 53240, comprising the reaction product of
a1) 5 to 63% by weight, preferably 21 to 50% by weight, based on the total weight of the end product, of one or more compound (s) having at least two OH groups and/or compound(s) having at least two NH groups or mixtures thereof, having an average functionality of 2.5 to 8, preferably 4 to 6.5, particularly preferably 4 to 6.0, especially preferably 4.2 to 5.5,
a2) 10-22% by weight, based on the total weight of the end product, of one or more fatty acid triglycerides comprising fatty acids having 10 to 22 carbon atoms which do not have free OH groups,
a3) 25 to 70% by weight, preferably 33% to 65% by weight, based on the total weight of the end product, of one or more alkylene oxides having 2 to 4 carbon atoms.

2. The polyetherester polyol according to claim 1, wherein the polyols or polyamines of component a1) are selected from the group consisting of sugars, pentaerythritol, sorbitol, trimethylolpropane, glycerol, tolylenediamine, ethylenediamine, ethylene glycol, propylene glycol, water and mixtures thereof.

3. The polyetherester polyol according to claim 2, wherein component a1) comprises a mixture of glycerol and saccharose, preferably in a mixing ratio of saccharose to glycerol in the range of 9:1 to 1:1, particularly preferably saccharose to glycerol of 4:1 to 1:1, based on the percentage by weight.

4. The polyetherester polyol according to claim 2 or 3, wherein component a2) is selected from the group consisting of soybean oil, rapeseed oil, palm oil, olive oil, sunflower oil, tallow, fish oil and mixtures thereof, preferably mixtures comprising soybean oil, rapeseed oil and/or palm oil, particularly preferably soybean oil.

5. The polyetherester polyol according to any of claims 1 to 4, wherein the alkylene oxide of component a3) is selected from the group comprising ethylene oxide, propylene oxide, butylene oxide and mixtures thereof, preferably mixtures comprising propylene oxide and ethylene oxide, particularly preferably propylene oxide.

6. The polyetherester polyol according to any of claims 1 to 5, wherein said polyetherester polyol has a functionality of 2.5 to 8, preferably 4 to 6.5.

7. The polyetherester polyol according to any of claims 1 to 6, wherein said polyetherester polyol has an acid number of less than or equal to 0.5 mg KOH/g, determined according to DIN 53402.

8. The polyetherester polyol according to any of claims 1 to 7, wherein the polyetherester has been prepared using an amine catalyst, preferably an imidazole.

9. A method for preparing a polyetherester polyol having an OH number of 480 to 580 mg KOH/g, determined according to DIN 53240, wherein
a1) 5 to 63% by weight, preferably 21 to 50% by weight, based on the total weight of the end product, of one or more compound (s) having at least two OH groups and/or compound(s) having at least two NH groups or mixtures thereof, having an average functionality of 2.5 to 8, preferably 4 to 6.5, particularly preferably 4 to 6.0, especially preferably 4.2 to 5.5, with
a2) 10-22% by weight, based on the total weight of the end product, of one or more fatty acid triglycerides comprising fatty acids having 10 to 22 carbon atoms which do not have free OH groups, and
a3) 25 to 70% by weight, preferably 33% to 65% by weight, based on the total weight of the end product, of one or more alkylene oxides having 2 to 4 carbon atoms, are reacted using a basic catalyst.

10. The method for preparing a polyetherester polyol according to claim 9, wherein the basic catalyst is selected from the group comprising KOH and aminic compounds, preferably aminic compounds, particularly preferably imidazole.

11. The method for preparing a polyetherester polyol according to claim 9 or 10, wherein the method is carried out in one process step.

12. The method for preparing a polyetherester polyol according to any of claims 9 to 11, wherein the polyols or polyamines of component a1) are selected from the group consisting of sugars, pentaerythritol, sorbitol, trimethylolpropane, glycerol, tolylenediamine, ethylenediamine, ethylene glycol, propylene glycol, water and mixtures thereof.

13. The method for preparing a polyetherester polyol according to any of claims 9 to 12, wherein component a1) comprises a mixture of glycerol and saccharose, preferably in a mixing ratio of saccharose to glycerol in the range of 9:1 to 1:1, particularly preferably saccharose to glycerol of 4:1 to 1:1, based on the percentage by weight.

14. The method for preparing a polyetherester polyol according to any of claims 9 to 13, wherein component a2) is selected from the group consisting of soybean oil, rapeseed oil, palm oil, olive oil, sunflower oil, tallow, fish oil and mixtures thereof, preferably mixtures comprising soybean oil, rapeseed oil and/or palm oil, particularly preferably soybean oil.

15. The method for preparing a polyetherester polyol according to any of claims 9 to 14, wherein the alkylene oxide of component a3) is selected from the group comprising ethylene oxide, propylene oxide, butylene oxide and mixtures thereof, preferably mixtures comprising propylene oxide and ethylene oxide, particularly preferably propylene oxide.

16. The method for preparing a polyetherester polyol according to any of claims 9 to 15, wherein the polyetherester polyol has a functionality of 2.5 to 8, preferably 4 to 6.5.

17. The method for preparing a polyetherester polyol according to any of claims 9 to 16, wherein the polyetherester polyol has an acid number of less than or equal to 0.5 mg KOH/g, determined according to DIN 53402.

18. A method for preparing a polyurethane, wherein the polyetherester polyol according to any of claims 1 to 8 or a polyetherester polyol which can be prepared by the method of any of claims 9 to 17 is reacted with at least one isocyanate, optionally using at least one propellant.

## Revendications

1. Polyéther-ester-polyol ayant un indice OH de 480 à 580 mg KOH/g, déterminé selon DIN 53240, contenant le produit de réaction de
a1) 5 à 63 % en poids, de préférence 21 à 50 % en poids, par rapport au poids total du produit final, d'un ou de plusieurs composés contenant au moins deux groupes OH et/ou composés contenant au moins deux groupes NH ou leurs mélanges, ayant une fonctionnalité moyenne de 2,5 à 8, de préférence de 4 à 6,5, de manière particulièrement préférée de 4 à 6,0, de manière tout particulièrement préférée de 4,2 à 5,5,
a2) par rapport au poids total du produit final, 10 à 22 % en poids d'un ou de plusieurs triglycérides d'acides gras, les acides gras comprenant 10 à 22 atomes C, qui ne comprennent pas de groupes OH libres,
a3) 25 à 70 % en poids, de préférence 33 à 65 % en poids, par rapport au poids total du produit final, d'un ou de plusieurs oxydes d'alkylène de 2 à 4 atomes C.

2. Polyéther-ester-polyol selon la revendication 1, **caractérisé en ce que** les polyols ou les polyamines du composant a1) sont choisis dans le groupe constitué par les sucres, le pentaérythritol, le sorbitol, le triméthylolpropane, la glycérine, la toluylène-diamine, l'éthylène-diamine, l'éthylène glycol, le propylène glycol, l'eau et leurs mélanges.

3. Polyéther-ester-polyol selon la revendication 2, **caractérisé en ce que** le composant a1) contient un mélange de glycérine et de saccharose, de préférence en un rapport de mélange entre le saccharose et la glycérine dans la plage allant de 9:1 à 1:1, de manière particulièrement préférée entre le saccharose et la glycérine de 4:1 à 1:1, par rapport aux pourcentages en poids.

4. Polyéther-ester-polyol selon la revendication 2 ou 3, **caractérisé en ce que** le composant a2) est choisi dans le groupe constitué par l'huile de soja, l'huile de colza, l'huile de palme, l'huile d'olive, l'huile de tournesol, le suif, l'huile de poisson et leurs mélanges, de préférence les mélanges contenant de l'huile de soja, de l'huile de colza et/ou de l'huile de palme, de manière particulièrement préférée l'huile de soja.

5. Polyéther-ester-polyol selon l'une quelconque des revendications 1 à 4, **caractérisé en ce que** l'oxyde d'alkylène du composant a3) est choisi dans le groupe contenant l'oxyde d'éthylène, l'oxyde de propylène, l'oxyde de butylène et leurs mélanges, de préférence les mélanges contenant de l'oxyde de propylène et de l'oxyde d'éthylène, de manière particulièrement préférée l'oxyde de propylène.

6. Polyéther-ester-polyol selon l'une quelconque des revendications 1 à 5, **caractérisé en ce qu'**il présente une fonctionnalité de 2,5 à 8, de préférence de 4 à 6,5.

7. Polyéther-ester-polyol selon l'une quelconque des revendications 1 à 6, **caractérisé en ce qu'**il présente un indice d'acidité inférieur ou égal à 0,5 mg KOH/g, déterminé selon DIN 53402.

8. Polyéther-ester-polyol selon l'une quelconque des revendications 1 à 7, **caractérisé en ce que** le polyéther-ester-polyol a été fabriqué en utilisant un catalyseur aminé, de préférence un imidazole.

9. Procédé de fabrication d'un polyéther-ester-polyol ayant un indice OH de 480 à 580 mg KOH/g, déterminé selon DIN 53240, dans lequel
a1) 5 à 63 % en poids, de préférence 21 à 50 % en poids, par rapport au poids total du produit final, d'un ou de plusieurs composés contenant au moins deux groupes OH et/ou composés contenant au moins deux groupes NH ou leurs mélanges, ayant une fonctionnalité moyenne de 2,5 à 8, de préférence de 4 à 6,5, de manière particulièrement préférée de 4 à 6,0, de manière tout particulièrement préférée de 4,2 à 5,5, sont mis en réaction avec
a2) par rapport au poids total du produit final, 10 à 22 % en poids d'un ou de plusieurs triglycérides d'acides gras, les acides gras comprenant 10 à 22 atomes C, qui ne comprennent pas de groupes OH libres, et
a3) 25 à 70 % en poids, de préférence 33 à 65 % en poids, par rapport au poids total du produit final, d'un ou de plusieurs oxydes d'alkylène de 2 à 4 atomes C,
en utilisant un catalyseur basique.

10. Procédé de fabrication d'un polyéther-ester-polyol selon la revendication 9, dans lequel le catalyseur basique est choisi dans le groupe contenant KOH et les composés aminés, de préférence les composés aminés, de manière particulièrement préférée l'imidazole.

11. Procédé de fabrication d'un polyéther-ester-polyol selon la revendication 9 ou 10, dans lequel le procédé est réalisé en une étape de procédé.

12. Procédé de fabrication d'un polyéther-ester-polyol selon l'une quelconque des revendications 9 à 11, dans lequel les polyols ou les polyamines du composant a1) sont choisis dans le groupe constitué par les sucres, le pentaérythritol, le sorbitol, le triméthylolpropane, la glycérine, la toluylène-diamine, l'éthylène-diamine, l'éthylène glycol, le propylène glycol, l'eau et leurs mélanges.

13. Procédé de fabrication d'un polyéther-ester-polyol selon l'une quelconque des revendications 9 à 12, dans lequel le composant a1) contient un mélange de glycérine et de saccharose, de préférence en un rapport de mélange entre le saccharose et la glycérine dans la plage allant de 9:1 à 1:1, de manière particulièrement préférée entre le saccharose et la glycérine de 4:1 à 1:1, par rapport aux pourcentages en poids.

14. Procédé de fabrication d'un polyéther-ester-polyol selon l'une quelconque des revendications 9 à 13, dans lequel le composant a2) est choisi dans le groupe constitué par l'huile de soja, l'huile de colza, l'huile de palme, l'huile d'olive, l'huile de tournesol, le suif, l'huile de poisson et leurs mélanges, de préférence les mélanges contenant de l'huile de soja, de l'huile de colza et/ou de l'huile de palme, de manière particulièrement préférée l'huile de soja.

15. Procédé de fabrication d'un polyéther-ester-polyol selon l'une quelconque des revendications 9 à 14, dans lequel l'oxyde d'alkylène du composant a3) est choisi dans le groupe contenant l'oxyde d'éthylène, l'oxyde de propylène, l'oxyde de butylène et leurs mélanges, de préférence les mélanges contenant de l'oxyde de propylène et de l'oxyde d'éthylène, de manière particulièrement préférée l'oxyde de propylène.

16. Procédé de fabrication d'un polyéther-ester-polyol selon l'une quelconque des revendications 9 à 15, dans lequel le polyéther-ester-polyol présente une fonctionnalité de 2,5 à 8, de préférence de 4 à 6,5.

17. Procédé de fabrication d'un polyéther-ester-polyol selon l'une quelconque des revendications 9 à 16, dans lequel le polyéther-ester-polyol présente un indice d'acidité inférieur ou égal à 0,5 mg KOH/g, déterminé selon DIN 53402.

18. Procédé de fabrication d'un polyuréthane, dans lequel le polyéther-ester-polyol selon l'une quelconque des revendications 1 à 8 ou un polyéther-ester-polyol pouvant être fabriqué par le procédé selon l'une quelconque des revendications 9 à 17 est mis en réaction avec au moins un isocyanate, éventuellement en utilisant au moins un agent gonflant.
